# EUROPEAN PATENT APPLICATION

(11) **EP 2 199 349 A1**
(43) Date of publication of application: **23.06.2010**
(21) Application number: 08172476.7
(22) Date of filing: 19.12.2008
(51) Int. Cl.: C09D 5/16, C08F 8/42, C08F 230/06

(54) **Resin composition, antifouling coating comprising barnacle antifoulant and processes of production thereof**

(71) Applicant: PPG B.V., 1422 AD Uithoorn (NL)
(72) Inventor: Vos, Marcel, 1974 LB, Ijmuiden (NL); Broek, Albert Dirk, 2352 EE, Leiderdorp (NL)
(74) Representative: Walsh, David Patrick

(57) **Abstract**

The present invention relates to antifouling coatings, resin compositions and processes of production thereof. In particular, the present invention relates to coatings comprising a barnacle antifoulant such as a catemine and resin compositions comprising stabilised acylated oxy-boranes.
The coatings include a barnacle antifoulant selected from at least one compound which interferes with nerve signalling in barnacles, particularly in cyprid barnacles.

## Description

The present invention relates to novel antifouling coatings, resin compositions and processes of production thereof. In particular, the present invention relates to coatings and resin compositions comprising stabilised acylated oxy-boranes in combination with barnacle antifoulants.

The presence of fouling on submerged structures can lead to a reduction in their performance, such as damage to static structures and underwater equipment or reduced speed and increased fuel consumption in ships. Antifouling systems have therefore been used to combat the detrimental effects of such fouling.

Conventional antifouling coatings are primarily composed of one or more biocides incorporated into a paint matrix. One such family of marine coatings, the highly successful self-polishing antifouling coatings based on organotin (TBT) polymers, has now been banned by legislation. Accordingly, marine coating chemists are currently trying to provide alternative tin-free, self-polishing copolymers to match the effectiveness of TBT polymers.

The preparation and use of triphenylborane complexed with various nitrogen moieties as an antifoulant is known JP7-133207, JP8-295608, JP8-295609, JP9-78007, JP10-182322, JP11-322763, JP2000302614, JP11292883, JP11080166, JP1999080166, JP2000143672, JP2000143417, JP2002301494, JP2002363014, JP2002363187, JP2002356475 and EP 0877061.

Triphenyl borane pyridine (PK) is a known antifouling biocide used in marine coatings. The biocide is dispersed in the paint matrix, the activity of the paint relies on the leaching rate of the biocide; which if uncontrolled often leads to poor long term performances.

JP2000290317 discloses ammonium-tetraarylborate polymer. JP200297118 discloses polymer bound 4-vinylpyridine complexed to Triphenyl Borane. Similarly, JP 11-199801 Al discloses a resin composition for heavy metal-free antifouling coatings. The composition comprises a polymer obtained by subjecting an unsaturated monomer having at least one nitrogen atom in the molecule to homopolymerization. The N atom is coordinated to a triaryl borane.

EP1245592 and JP2002284786 disclose acyloxy triphenylborane containing monomers and polymers which can be used in antifouling coatings. The borane moiety may be grafted onto an acidic polymer. However, the instant inventors have found that all the examples of EP'592 give no or a low yield in the grafting of the borane moiety on to the acidic polymer. The products obtained by any example therein are either turbid or turn to gel; these polymers are not suitable for coatings.

It is one object of the present invention to solve these and other problems.

According to the present invention there is provided an antifouling coating comprising a resin composition, a solvent and a barnacle antifoulant, the resin composition comprising a polymer having in a pendant side chain or at a terminal end thereof, at least one group represented by formula (I):- 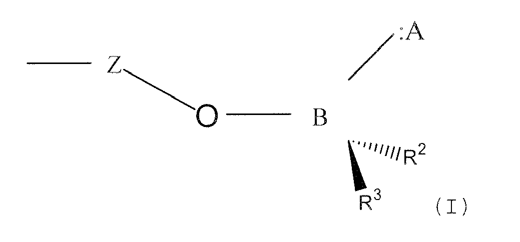 wherein Z represents 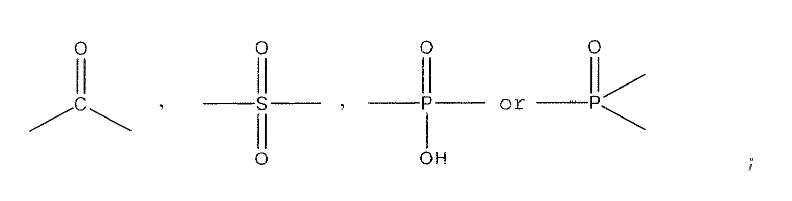 wherein R² and R³ are independently selected from an alkyl, alkenyl, alkynyl, aryl, aralkyl or alkaryl radical optionally substituted, by one or more substituents independently selected from the group comprising alkyl, alkoxyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond; optionally, the solvent being free of n-butanol and **characterised in that** the barnacle antifoulant is selected from at least one compound which interferes with nerve signalling in barnacles, particularly in cyprid barnacles.

The present invention relates to the use of specific barnacle antifoulants which have been found to be particularly effective in antifouling coatings by interfering with nerve signalling in barnacles, particularly via G-protein coupled receptors. Preferably, the barnacle antifoulants of the present invention disturb or block the nerve signalling related to the fixation of the barnacle onto the coated surface. As such, the barnacle antifoulants of the present invention may not be barnaclecides and are preferably of low toxicity specifically interfering with the nerve signalling pathway to the target cells thus preventing barnacle adhesion to the coated surface.

Particularly preferred barnacle antifoulants have an amine group or contain a nitrogen containing heterocyclic group or both. Preferred barnacle antifoulants are selected from an aromatic compound substituted with at least one heterocyclic amine (a heterocyclic compound comprising an amino group or substituted with an amino group) and optionally other substituents. Preferred heterocycles are imidazoles, imidazolines, oxazoles and oxazolines. The amine nitrogen may form part of the heterocyclic ring or be a substituent to the ring. Preferably, the heterocyclic amine is joined to the aromatic ring via a linking group selected from an optionally substituted alkylene bridge, more preferably, an optionally substituted C1-C2 bridge, most preferably, optionally substituted methylene; or an amino group.
The bridge may be substituted with lower C1-4 alkyl groups, more preferably, methyl groups, and/or halo groups, more preferably chloro groups. Optionally, further such linking groups may also extend between the heterocyclic amine and the aromatic ring to thereby form a further ring or rings. Preferably, the heterocyclic amine is joined to the aromatic ring via one of its heterocyclic carbon atoms. The amino substituent (when present) on the heterocyclic amine may also act as the bridge to the aromatic compound.

The preferred aromatic compound is an optionally further substituted benzene ring. Preferred further substituents are lower C1-4 alkyl groups, more preferably, methyl groups, and halo groups, more preferably chloro groups. Preferred positions for further substitution are adjacent to the atom in the ring substituted by heterocyclic group although substitution in further positions is also possible. Particularly preferred further substitution is dimethyl, methyl, dichloro and chloro.

Surprisingly, therefore barnacle antifoulants having an amine and/or nitrogen containing heterocyclic group, particularly those with a primary amine group are particularly effective as a barnacle antifoulant when in combination with a resin comprising a polymer having in a pendant side chain or at a terminal end thereof, at least one group represented by formula (I):- 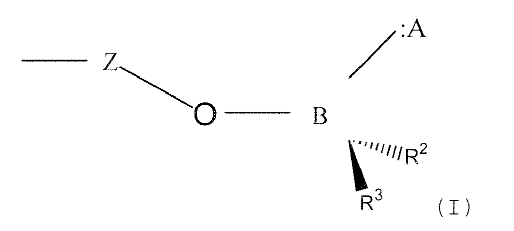 as defined above. The amine group or nitrogen containing heterocycle group of the preferred barnacle antifoulants of the present invention may act to stabilise the borane thus simultaneously providing both a boron stabilising and barnacle antifouling function. Thus barnacle antifoulants incorporating groups from the stabilisers described hereafter are preferred.

A suitable group of barnacle antifoulants are the so called Catemine antifoulants. These compounds interfere with nerve signalling, particularly in relation to cyprid barnacles. Suitable Catemines have been described in US 6,762, 227, SE0300863-8 and WO2007/15676 Catemines which may be advantageously used in the antifouling coatings of the present invention include Catemine I (medetomidine), Catemine 3 (spiroimidazoline) and Clonidine or suitable analogues or salts thereof. The structures of these imidazole compounds are shown below.

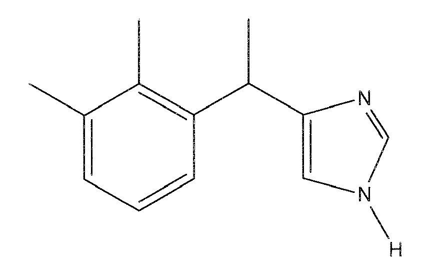

### Medetomidine(4-[1-(2,3-dimethyl-phenyl)-ethyl]-1H-imidazole)

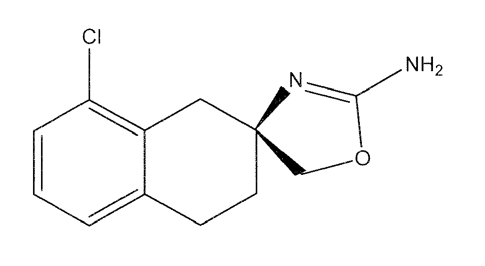

### Spiroimidazoline (4-[5-chloro-1,2,3,4-tetrahydronaphthyl]-2-amino-oxazoline)

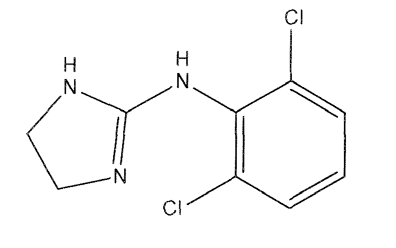

### Clonidine

Preferably, if Catemine I is used, the stereoisomer of catemine I Dexmedetomidine is utilised which has the following stereo specific structure.

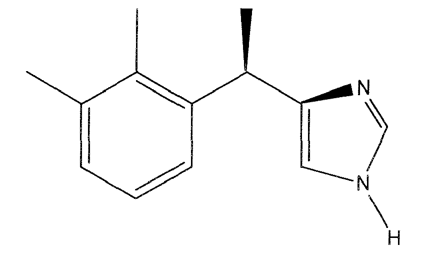

A salt such as the mono-hydrogen chloride of any of the above catemines may be utilised.

The most preferred Catemine is Catemine 3 above.

The barnacle antifoulants of the present invention may be introduced into the antifouling paint formulation on a suitable particulate carrier. Suitable particulate carriers are nanoparticles.

Preferably, the solvent is free of C1-C10 alkanols, more preferably, alcohols.

Surprisingly, by keeping the coating composition free of C1-C10 alkanols, particularly n-butanol, a much higher antifouling activity was found in the coating, gel formation was reduced and hydrolysis was improved.

According to a second aspect of the present invention there is provided an antifouling coating comprising:-
(a) a resin composition having
   a polymer including in a pendant side chain or at a terminal end thereof, at least one group represented by formula (I):- 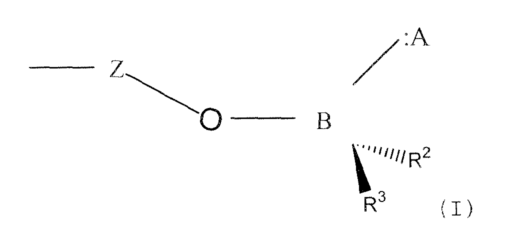 wherein Z represents 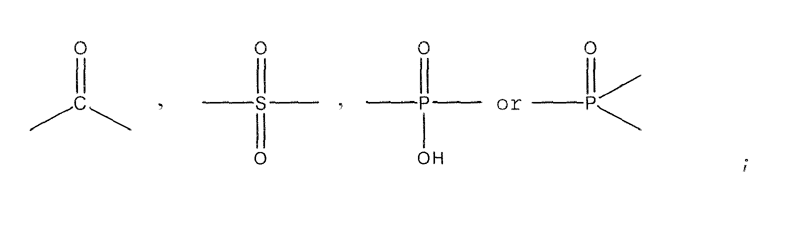 wherein R² and R³ are independently selected from an alkyl, alkenyl, alkynyl, aryl, aralkyl or alkenyl radical optionally substituted, by one or more substituents independently selected from the group comprising alkyl, alkoxyl, aralkyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond;
optionally, the resin composition including a solvent and being free of n-butanol;
**characterised in that** the coating includes a barnacle antifoulant selected from at least one compound which interferes with nerve signalling in barnacles, particularly in cyprid barnacles.

Preferably, the solvent is free of C1-C10 alkanols, more preferably, alcohols.

Surprisingly, by keeping the resin solution free of C1-C10 alkanols, particularly, n-butanol, a much higher yield of side chains or terminal groups of formula (I) is obtained.

According to a third aspect of the present invention there is provided an antifouling coating comprising a resin composition and a barnacle antifoulant, the resin composition comprising a polymer having in a pendant side chain or at a terminal end thereof, at least one group represented by formula (I):- 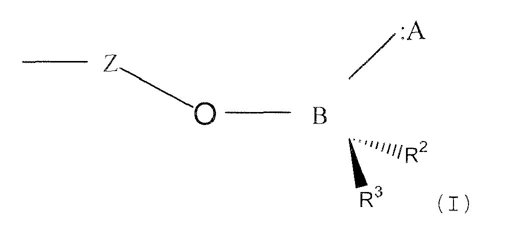 wherein Z represents 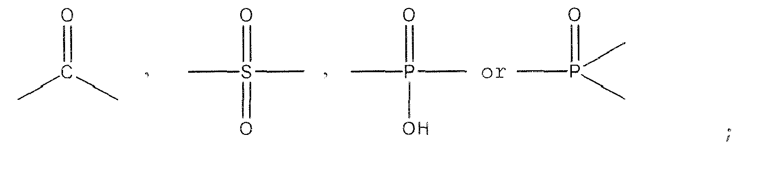 wherein R² and R³ are independently selected from an alkyl, alkenyl, alkynyl, aryl, aralkyl or alkaryl radical optionally substituted, by one or more substituents independently selected from the group comprising alkyl, alkoxyl, aralkyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond;
the resin composition being optionally free of alkoxy boryl residues;
**characterised in that** the at least one barnacle antifoulant is selected from at least one compound which interferes with nerve signalling in barnacles, particularly in cyprid barnacles.

By the term free in the present invention is meant < 1% w/w, more preferably, < 0.1 % w/w of the specific moiety, alcohol etc.

According to a fourth aspect of the present invention there is provided an antifouling coating comprising:-
(a) a resin composition having
   a polymer including in a pendant side chain or at a terminal end thereof, at least one group represented by formula (I):- 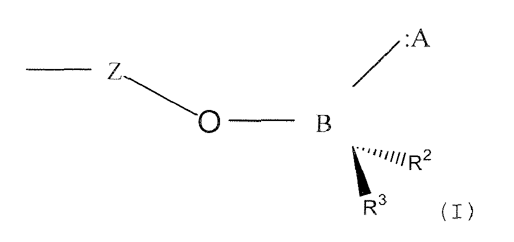 wherein Z represents 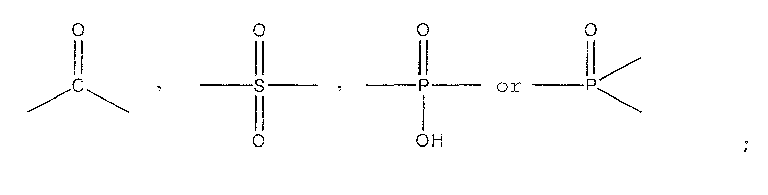 wherein R² and R³ are independently selected from an alkyl, alkenyl, alkynyl, aryl, aralkyl or alkaryl radical optionally substituted by one or more substituents independently selected from the group comprising alkyl, alkoxyl, aralkyl, alkaryl, aralkyloxyl, alkaryloxyl, aryl, aryloxyl, halogen, amino or amino alkyl radicals;
   and wherein A: represents a primary to tertiary amine or a nitrogen containing heterocyclic compound which in either case is coordinated with the boron through an N-B bond;
   the composition including a stabiliser to stabilise the group of formula I;
   **characterised in that** the coating includes a barnacle antifoulant which optionally may also be the stabiliser and which is selected from at least one compound which interferes with nerve signalling in barnacles, particularly in cyprid barnacles.

Typically, the stabiliser is an amine or nitrogen containing heterocyclic compound.

Preferably, the stabiliser is an uncomplexed heterocyclic compound having a substituted or unsubstituted nitrogen atom, more preferably an unsubstituted nitrogen atom.

The stabiliser is preferably a heterocyclic compound containing at least one nitrogen atom. The heterocyclic compound can also include further hetero atoms selected from nitrogen, oxygen and sulphur. Up to 5 heteroatoms may be present in the stabiliser. Preferably, the heterocyclic compound includes at least a 4-12 membered ring, more preferably a 5-8 membered ring. The heterocyclic compound may be mono, bi or poly cyclic.

Preferably, the at least one nitrogen forms part of a 4-12 membered heterocyclic ring. The heterocyclic compound may be saturated, unsaturated and/or aromatic.

The above heterocyclic compound containing at least one nitrogen atom may be selected from pyridine, pyrrole, pyrazole, isoxazole, pyrazine, pyrimidine, imidazole, quinoline, indole, carbazole, phenanthroline, piperidine and quinuclidine; and heterocyclic compounds having a substituent group, such as ethyl pyridine, nicotinic acid, octyl nicotinate, vinyl pyridine, allyl pyridine, 2,6-dimethyl pyridine, 4-dimethylaminopyridine, picolinic acid, 1-methyl imidazole, morpholine, N-ethyl piperidine, N-methyl pyrrolidine and N-ethyl morpholine.

Accordingly, the stabiliser may be selected from the heterocyclic compounds having a substituted or unsubstituted nitrogen atom detailed above, especially pyridine or pyridine substituted by alkyl, alkenyl, alkynyl, aralkyl, alkaryl, aryl or aryl radicals as defined herein.

Alternatively, the stabiliser may be any primary, secondary or tertiary amine having one or more alkyl, cycloalkyl, alkenyl, alkynyl, aralkyl, alkaryl, aryl group(s) or combinations thereof as defined herein, which groups may be unsubstituted or substituted with alkoxy, halogen, hydroxyl, -COOH, -COOalkyl or further amino radicals as for example: n-butylamine, sec-butylamine, tert-butylamine, iso-octylamine, n-pentylamine, neo-pentylamine, n-hexylamine, n-heptylamine, n-octylamine, n-nonylamine, n-decylamine, n-undecylamine, n-dodecylamine, n-hexadecylamine, n-octadecylamine, cyclohexylamine, diisopropylamine, di-cyclohexylamine, di-n-butylamine, tri-n-butylamine, di-ethylamine, triethylamine, aniline, 2-phenylethylamine, N,N-dimethylaniline, diphenylamine, triphenylamine, benzylamine, N-ethylbenzylamine, N,N-dimethyl benzylamine.

Preferably, the stabiliser is added to the composition at a level of 1-50%, more preferably 1-15%, most preferably 1-10%, especially 5-10% wt/wt total resin composition.

Surprisingly, the inventors have found a dramatic improvement in the yield of boron complexed polymer when produced in the absence of alcohols such as n-butanol. In addition, the inventors have discovered that certain additives can improve stability of the polymers.

Accordingly, the present invention also provides a method of producing an antifouling coating having a boron-containing polymer and a barnacle antifoulant which comprises a step of reacting a polymer having at least one acid group of formula -Z(OH)ₙ where n=1 or 2 and Z is as defined in claim 1 above in a side chain or at a terminal end thereof, with a nitrogen atom-coordinated boron compound represented by the following formula (II): 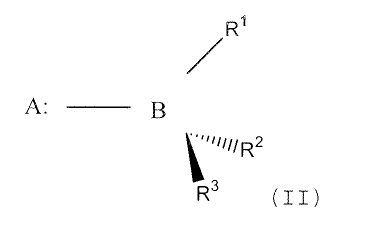 wherein R¹, R² and R³ may be the same or different and are independently selected from an alkyl, alkenyl, alkynyl, aryl, aralkyl or alkaryl radical optionally substituted by one or more substituents independently selected from the group comprising alkyl or aryl, alkoxyl, aralkyl, alkaryl, aralkyloxyl, alkaryloxyl, aryl, aryloxyl, halogen, amino or amino alkyl radicals; and A represents a primary to tertiary amine or a nitrogen containing heterocyclic compound which in either case is coordinated with the boron through an N-B bond;
wherein the polymer reaction takes place in the absence of n-butanol; and
adding at least one barnacle antifoulant selected from at least one compound which interferes with nerve signalling in barnacles, particularly in cyprid barnacles, to the boron-containing polymer.

Preferably, the reaction takes place in the absence of any C₁-C₁₀ alkanol, more preferably in the absence of any alcohol.

According to a still further aspect of the present invention there is provided a method of producing an antifouling coating having a boron-containing polymer and a barnacle antifoulant which comprises (a) reacting a polymerizable organic acid with a nitrogen atom-coordinated boron compound represented by the formula (II) as defined above, wherein the reaction takes place in the absence of n-butanol and (b) polymerizing or copolymerising a monomer component comprising the boron-containing polymerizable monomer obtained in step (a), optionally, in the absence of n-butanol; and
adding at least one barnacle antifoulant selected from at least one compound which interferes with nerve signalling in barnacles, particularly in cyprid barnacles, to the resulting boron-containing polymer.

Preferably, the amount of barnacle antifoulant of the present invention present in the coating depends on the level of activity required for the particular application and on the potency of the barnacle antifoulant. Typical levels in the antifouling coating are between 0.005 and 10 wt %, more typically, 0.01 and 2 wt%, most typically between 0.05 and 1 wt%.

Preferably, the reaction takes place in the absence of any C₁-C₁₀ alkanol, more preferably in the absence of any alcohol.

Preferably, said polymerizable organic acid is a polymerizable organic carboxylic acid, a polymerizable organic sulfonic acid or a polymerizable organic phosphoric acid.

Moreover, the present invention provides a resin composition which comprises a boron-containing polymer obtainable by the above production methods of the boron-containing polymer.

Moreover, the present invention provides an antifouling coating which comprises the above resin composition.

By resin composition herein is meant the resin polymer(s) together with any solvent and other resin additives such as stabilisers as mentioned herein and references herein to resin composition should be understood accordingly, unless indicated otherwise. It will therefore be appreciated that a paint or coating composition containing the said resin composition may also contain further additives in addition to the resin composition and may also include further solvent which may be the same or different to any resin composition solvent. Optionally, however, the coating or paint compositions of the present invention may also be free of n-butanol, C1-C10 alcohols or alcohols.

The acid value of the polymer having at least one acid group in a side chain or at a terminal thereof obtained in the manner described above is preferably 40 to 120 mg KOH/g polymer. Given an acid value of less than 40 mg KOH/g, the antifouling property of the resulting coating film may be insufficient due to a decreased amount of the nitrogen atom-coordinated boron compound bound to the polymer, while given an acid value of more than 120 mg KOH/g, the resulting coating film tends to gel. The acid value is more preferably 50 to 90 mg KOH/g. The above acid value is easily determined and can be affected by choice of monomers and the amounts of the monomer used

The formation of diacylated and possibly triacylated boron containing moieties is inevitable in the absence of an alcohol such as n-butanol and this can lead to undesirable cross-linking of the polymer. By careful control of the stabiliser level cross-linking is minimised. Preferably, the di- and tri-acylated boron moieties represent less than 5%, more preferably, less than 3%, most preferably, less than 1% w/w of the total boron. Typically, the diacylated boron moieties are between 0.5% - 5% of the total boron moieties bound to the polymer acid groups, more preferably, 1%-4%. The % of di and tri-acylated moieties bound to the polymer may be determined by determination of the acid value in mg KOH/g of the polymer in the absence of the boron compound. Determining the theoretical reduction acid value expected by the moles of boron compound being added and comparing this value with an experimentally determined value KOH/g after addition of the requisite moles of boron compound to the polymer.

The use of high acid content polymers has been found to hinder film formation and, in addition, lead to gel formation. Surprisingly, the addition of a further acid, particularly a low volatility acid improves film formation at higher polymer acid levels and also prevents gel formation.

Therefore, according to a further aspect of the present invention there is provided an antifouling coating comprising:-
(a) a binder composition, the binder composition having a boron containing polymer of formula (ZO)ₙBR₃₋ₙ: A wherein n=1-3 and R may be R² and/or R³ as defined below derived from a polymer having an acid level of greater than 60mg KOH/g polymer, and a boron complex of formula II 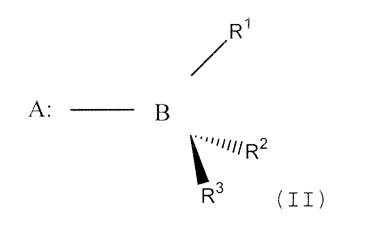 wherein R¹, R² and R³ are independently selected from an alkyl, alkenyl, alkynyl, aryl, aralkyl or alkaryl radical optionally substituted by one or more substituents independently selected from the group comprising alkyl, alkoxyl, aralkyl, alkaryl, aralkyloxyl, alkaryloxyl, aryl, aryloxyl, halogen, amino or amino alkyl radicals; and
   A: represents a primary to tertiary amine or a nitrogen containing heterocyclic compound which in either case is coordinated with the boron through an N-B bond;
   wherein the binder composition includes an additional acid, the said additional acid having been added at a ratio of less than 1 mole equivalent additional acid : 1 mole equivalent of the added boron complex in the binder composition; and
(b) at least one barnacle antifoulant selected from at least one compound which interferes with nerve signalling in barnacles, particularly in cyprid barnacles.

In this respect, it should be noted that if there is >1 eq acid functional polymer/additional acid combined versus the borane complex of formula II, the formation of diacylated boryl compounds or mixtures of mono-di and tri acylated boryl compounds is likely. In the above formula where n=1-3, pendant boryl complex groups having n=1,2 and/or 3 can be found. Preferably, the incidence of n=2 and/or 3 accounts for less than 10% of the boryl complex moieties, typically, 1-10%. Preferably, therefore, the resin compositions of the present invention may include polymer having, in addition to pendant side chains or terminal groups of formula I, cross-linked groups of formula IV and V. 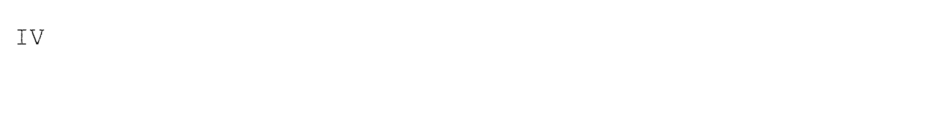 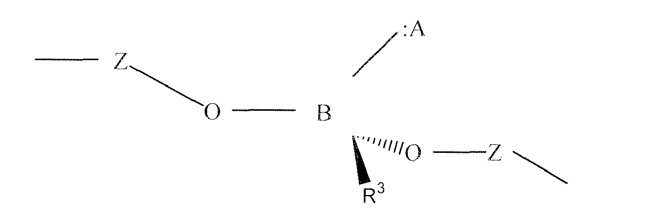 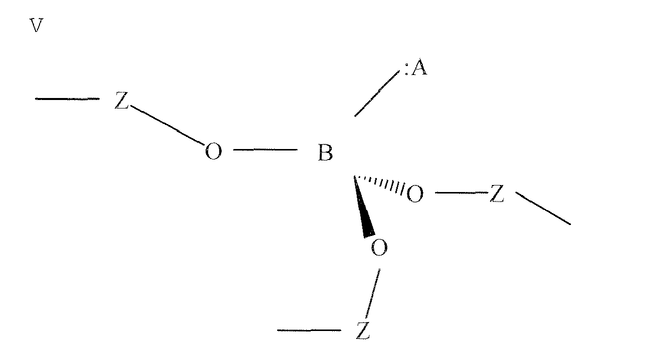 wherein Z, A and R³ are as defined herein for formula I.

Preferably, the ratio of acidic polymer:additional acid is in the range 10:1 to 1:10, preferably 3:1 to 1:2.

Preferably, the additional acid is a non-polymerisable acid, the acid may be selected from rosin, hydrogenated rosin, acetic acid, naphthenic acid, picolinic acid, benzoic acid and p-tertbutyl benzoic acid.

The boron complex in the resin composition may be in its initial chemical complex form (II) or may have reacted with other components of the composition. Accordingly, the mole equivalents of added boron complex is compared with the additional acid in the above aspect of the invention.

As mentioned above, the resin composition of the present invention comprises a boron-containing polymer having at least one group represented by the above formula (I) in a side chain or at a terminal end thereof.

In the above formula (I), where Z represents a part of an acid group, Z is preferably a part of a carboxylic acid group.

As used herein, the term "independently selected" or "independently represent" indicates that the or each radical R or other group so described, can be identical or different.

The term "alkyl", as used herein, relates to saturated hydrocarbon radicals being straight, branched, polycyclic or cyclic moieties or combinations thereof and contains 1 to 20 carbon atoms, preferably 1 to 10 carbon atoms, more preferably 1 to 8 carbon atoms, still more preferably 1 to 6 carbon atoms, yet more preferably 1 to 4 carbon atoms. Examples of such radicals may be independently selected from methyl, ethyl, n-propyl, isopropyl, n-butyl, isobutyl, set-butyl, tert-butyl, 2-methylbutyl, pentyl, iso-amyl, hexyl, cyclohexyl, 3-methylpentyl, octyl, fully hydrogenated abietyl and the like.

The term "alkenyl", as used herein, relates to hydrocarbon radicals having one or several double bonds, being straight, branched, polycyclic or cyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. Examples of alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl, abietyl, dihydroabietyl, abietyl dimer (Dymerex^{®}), and the like.

The term "alkynyl", as used herein, relates to hydrocarbon radicals having one or several triple bonds, being straight, branched, polycyclic or cyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. Examples of alkynyl radicals include ethynyl, propynyl, propargyl, butynyl, pentynyl, hexynyl and the like.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. Said radical may be optionally substituted with one or more substituents independently selected from alkyl, alkoxy, halogen, hydroxyl or amino radicals. Examples of aryl include phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl, acenaphthyl, dehydroabietyl and the like, phenyl being most preferred.

The term "aralkyl" or "alkaryl" as used herein, relates to a group of the formula alkylene-aryl or arylenealkyl, in which alkylene and arylene have the same meaning as alkyl or aryl as defined above (except a further hydrogen has been removed to render it bivalent). Examples of aralkyl and alkaryl radicals include benzyl, phenethyl, dibenzylmethyl, methylphenylmethyl, 3- (2-naphthyl)-butyl, methylbenzene and the like.

The terms "alkoxyl" and "aryloxyl" means an alkyl or aryl group bonded to an oxygen which oxygen is bonded to the alkyl/aryl substituted group. Alkaryloxyl and aralkyloxy can be understood with reference to the above definitions.

As mentioned above, the group A represents a primary to tertiary amine or a nitrogen containing heterocyclic compound.

The above primary to tertiary amine may be selected from alkyl group-containing amines such as octadecyl amine, capryl amine, lauryl amine, myristyl amine, stearyl amine, dimethyl amine, triethyl amine etc.; acyl group-containing amines such as acetyl amine etc.; alkoxyl group-containing amines such as 3-ethoxypropyl amine, ethoxymethyl amine etc.; aryl group-containing amines such as aniline, hexyl aniline etc.; allyl amine, vinyl amine, aminostyrene, etc. A primary amine is preferred to a secondary or tertiary amine.

The heterocyclic compound can also include further hetero atoms selected from nitrogen, oxygen and sulphur. Up to 5 heteroatoms may be present in the compound. Preferably, the heterocyclic compound includes at least a 4-12 membered ring, more preferably a 5-8 membered ring. The heterocyclic compound may be mono, bi or poly cyclic.

Preferably, the at least one nitrogen forms part of a 4-12 membered heterocyclic ring. The heterocyclic compound may be saturated, unsaturated and/or aromatic.

The above heterocyclic compound containing at least one nitrogen atom may be selected from pyridine, pyrrole, pyrazole, isoxazole, pyrazine, pyrimidine, imidazole, quinoline, indole, carbazole, phenanthroline; and heterocyclic compounds having a substituent group, such as 2-ethyl pyridine, picolinic acid, nicotinic acid, octyl nicotinate, vinyl pyridine, allyl pyridine, etc. The above substituent group includes those specifically mentioned hereinabove.

Accordingly, the heterocyclic compound may have a substituted or unsubstituted nitrogen atom. Suitable substituents include alkyl, aryl, alkenyl, alkynyl, alkaryl and aralkyl.

The boron-containing polymer having at least one group represented by the above formula (I) has preferably a number average molecular weight of 2000 to 40000. If the molecular weight is less than 2000, the resultant resin composition is poor in the film forming ability and may cause abnormalities in the coating film, such as cracking, peeling etc., while if the molecular weight exceeds 40000, the viscosity of the coating will be increased to cause inferior handling properties, in some cases.

The number average molecular weight mentioned above may be determined by gel permeation chromatography using polystyrene standards.

As should be clear from the foregoing, the boron-containing polymer having at least one group represented by the above formula (I) can be produced by reacting a polymer having at least one acid group in a side chain or at a terminal end thereof, with the nitrogen atom-coordinated boron compound represented by the above formula (II). Alternatively, the polymer of the invention may be produced by reacting a monomer having at least one acid group with the nitrogen atom coordinated boron compound represented by the above formula II and thereafter polymerising or copolymerising the nitrogen atom coordinated boron complex esterified monomer. These production methods also fall under the scope of the present invention.

The above acid group is preferably a carboxylic acid group, a sulfonic acid group or a phosphoric acid group. It is more preferably a carboxylic acid group.

The polymer having at least one acid group in a side chain or at a terminal end thereof is not particularly limited insofar as it has at least one acid group described above, and examples thereof include an acrylic resin, polyester resin, alkyd resin, epoxy resin, etc. Preferably, however, an acrylic resin is used.

The production method of the polymer having at least one acid group in a side chain or at a terminal end thereof can be any suitable process known in the art. For example, the acrylic resin can be obtained by homopolymerising or copolymerizing a polymerizable monomer having an acid group with co-monomers as necessary.

The above polymerizable monomer having an acid group which may be polymerised or copolymerised before or after reaction with the nitrogen atom-coordinated boron compound of formula (II) includes monomers having a carboxylic acid group, such as (C₀-C₈ alk)acrylic acids, for example, methacrylic acid, acrylic acid, itaconic acid, monoalkyl itaconate, monoalkyl maleate (alkyl in the monoalkyl residue includes, for example, C₁₋₂₀ alkyl such as methyl, ethyl, butyl, 2-ethylhexyl, etc.), half esters of an OH group-containing polymerizable unsaturated monomer and an acid anhydride, for example, half esters of 2-hydroxyethyl (meth)acrylate and succinic anhydride, maleic anhydride, or phthalic anhydride; monomers having a sulfonic acid group, such as p-styrene sulfonic acid, 2-methyl-2-acrylamide propane sulfonic acid etc.; and monomers having a phosphoric acid group, such as phosphoxypropyl methacrylate, 3-chloro-2-phosphoxypropyl methacrylate, phosphoxyethyl methacrylate etc.

The above co-monomers may be selected from one or more different C₁-C₂₀alkyl(C₀-C₈ alk)acrylates or one or more corresponding acids, as mentioned above or functionalised acrylates of the aforesaid, or may alternatively be selected from a different vinylic co-monomer such as styrene, alpha methyl styrene, vinyl alcohol, vinyl toluene, vinyl chloride, vinylidene chloride, butadiene, ethylene, butyl fumarate, butyl maleate, vinyl acetate or the like.

Suitable functionalised acrylates include those wherein the alkyl group is replaced with a functionalised group such as epoxy, hydroxyalkyl or amine groups for example glcidyl methacrylate, 2-hydroxyethyl acrylate or acrylamide. Alternatively, the acrylic group may be functionalised by introduction of functional groups on the vinylic carbons such as halogens.

Still further, the acrylic monomers may be multifunctional in the sense of having two or more vinyl groups, examples of which include hexane diol diacrylate and trimethylol propane triacrylate.

Particularly suitable acrylates include methyl (meth)acrylate, ethyl (meth)acrylate, butyl (meth)acrylate, stearyl (meth)acrylate, 2-hydroxpropyl(meth)acrylate, t-butyl(meth)acrylate, 2-hyroxethyl(meth)acrylate and lauryl (meth)acrylate.

The polymers of the invention can be blended with other compatible polymers to produce polymer blends for instance the acrylic polymers of the invention can be blended with other acrylic or compatible non-acrylic polymers to produce polymer blends having the appropriate coating properties.

Pigments, further antifouling agents, solvents and other additives can be added to the polymers of the invention to produce the appropriate coating and are well known in the art.

Suitable solvents for the antifouling coating of the present invention include acetates, ketones and non functional group containing aromatic compounds such as ethyl acetate, butyl acetate, methylethyl ketone, methyl isobutyl ketone, ethylene glycol monoethylether acetate, methoxypropyl acetate, toluene, xylene, white spirit, ethoxypropyl acetate, ethoxyethyl propionate, methoxybutyl acetate, butyl glycol acetate, solvent naphtha, and mixtures of these solvents. The solvents are used in a quantity of up to 70% by weight, preferably up to 40% by weight, based on the weight of the antifouling composition. The solvents of the invention may exclude alcohols. However, the exclusion of n-butanol and, preferably, C₁-C₁₀ alkanols only is also advantageous.

Further additives to be used if required are, for example, plasticizers such as, for example, tricresyl phosphate, phthalic diesters or chloroparaffins ; pigments such as colour pigments, bright pigments, and extender pigments and fillers, such as titanium oxide, barium sulphate, chalk, carbon black; catalysts such as, for example, N,N-dimethylbenzylamine, N-methylmorpholine, zinc octoate, tin(II) octoate and dibutyltin dilaurate ; levelling agents; thickeners; stabilizers, such as substituted phenols or organ functional silanes. Adhesion promoters and light stabilizers may also be utilised.

One or more such co-monomers may be polymerised with the acid and/or the nitrogen atom co-ordinated boron complex esterified monomer.

The reaction of a triphenylborane-amine complex with a carboxylic acid is called protonolysis. Protonolysis of boranes with carboxylic acids is a known reaction and in general, the same mechanism may be envisaged for trialkylboranes and triphenyl boranes.

Trialkyl or triaryl boranes are not stable as such and always need to be complexed by a Lewis base (ethers, sulfides or amines) in order to be stable. The complexing agent may easily be interchanged depending on the relative strength of the complex moiety or on the difference of solubility/volatility (amine interchange) of the complexing agent.

Trialkyl(aryl) boranes (i) undergo B-C cleavage by carboxylic acids (ii) to lead to acyloxy dialkyl(aryl) borinates (iii) and the corresponding alkanes(arenes) (iv) under the following mechanism.

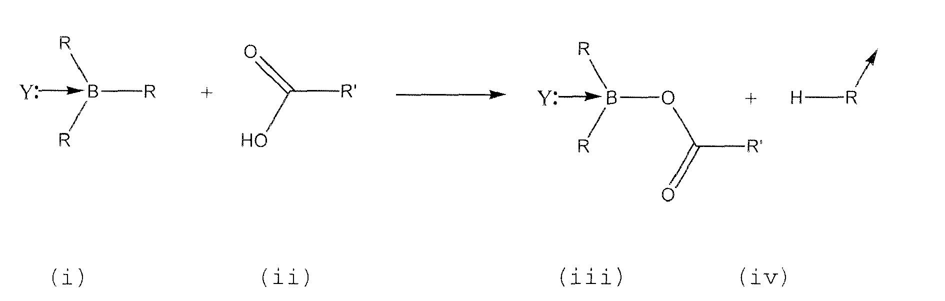

The main by-product of that reaction is thus an alkane in the case of trialkyl boranes or an aromatic compound in the case of triarylboranes. As the most common raw materials are triethyl- or triphenyl borane, the process may thus generate ethane or benzene, the latter being removed from the reactor by distillation.

Starting from acidic polymers or polymerisable monomers, the acyloxy borinate is thus grafted onto the polymer chain. The completion of the reaction may be monitored by ¹³C or ¹¹B NMR or by the determination of the amount of benzene or alkane released.

Thus the nitrogen atom-coordinated boron compounds of formula (I) can be produced in high yield using the above reaction. The nitrogen atom coordinated boron complex (II) can initially be prepared by reacting a tri-substituted boron compound to which a basic compound such as sodium hydroxide has been added, with the primary to tertiary amine or the heterocyclic compound containing a substituted or unsubstituted nitrogen atom represented by A.

Tri-substituted boron compounds are commercially available or can be obtained by reacting BF₃•O(R)₂ (R is ethyl, propyl, phenyl, etc) with a Grignard reagent in THF or dry toluene.

The reaction of the acidic polymers having at least one acid group in a side chain or at a terminal end thereof with the above nitrogen atom-coordinated boron compound (II) can be carried out at about 40 to 130 °C, preferably about 80 °C.

In the reaction of acidic polymer or polymerisable acid monomer with boron complex of formula (II), the mixing ratio between the polymer having at least one acid group in a side chain or at a terminal end thereof and the nitrogen atom-coordinated boron compound is generally selected such that 0.3 to 3 molecules, preferably 0.7 to 2 molecules, of the above nitrogen atom-coordinated boron compound are added per acid group into which the nitrogen atom-coordinated boron compound is to be introduced and optionally in the absence of an alcohol solvent.

The incorporated amount of the above-mentioned other binder resins is preferably other binder resins 0-70 wt% and boron-containing polymer 100 to 30 wt %. Having a proportion of the above "other binder resins" higher than the above range is not preferable because both excellent long-term antifouling properties and excellent anti-cracking properties of the coating film will not then be secured simultaneously.

The resin composition of the present invention can be incorporated suitably into an antifouling coating. The antifouling coating into which the above resin composition is incorporated also falls under the scope of the invention. The incorporated amount of the above resin composition is generally 0.1 to 80 % by mass of the solid content in the antifouling coating. If the amount is less than 0.1 % by mass, the resulting coating film is inferior in the antifouling property, while the amount is higher than 80 % by mass, there may occur inconveniences such as cracking in the coating film. Preferably, the amount is 1 to 60 % by mass.

Further antifoulants although not essential to the present invention may be used as a component in the coating composition of the present invention and may be any of one or more conventionally known antifoulants. The known antifoulants are roughly divided into inorganic compounds, metal-containing organic compounds, and metal-free organic compounds.

Examples of the inorganic compounds include copper compounds (e.g. copper sulphate, copper powder, cuprous thiocyanate, copper carbonate, copper chloride, and the traditionally preferred cuprous oxide), zinc sulphate, zinc oxide, nickel sulphate, and copper nickel alloys.

Examples of the metal-containing organic compounds include organo-copper compounds, organo-nickel compounds, and organo-zinc compounds. Also usable are manganese ethylene bis dithiocarbamate (maneb), propineb, and the like. Examples of the organo-copper compounds include copper nonylphenol-sulphonate, copper bis(ethylenediamine) bis(dodecylbenzene sulphonate), copper acetate, copper naphthenate, copper pyrithione and copper bis(pentachlorophenolate). Examples of the organo-nickel compounds include nickel acetate and nickel dimethyl dithiocarbamate. Examples of the organo-zinc compounds include zinc acetate, zinc carbamate, bis(dimethylcarbamoyl) zinc ethylene-bis(dithiocarbamate), zinc dimethyl dithiocarbamate, zinc pyrithione, and zinc ethylene-bis(dithiocarbamate). As an example of mixed metal-containing organic compound, one can cite (polymeric) manganese ethylene bis dithiocarbamate complexed with zinc salt (mancozeb).

Examples of the metal-free organic compounds include N-trihalomethylthiophthalimides, trihalomethylthiosulphamides, dithiocarbamic acids, N-arylmaleimides, 3-(substituted amino)-1,3 thiazolidine-2,4-diones, dithiocyano compounds, triazine compounds, oxathiazines and others.

Examples of the N-trihalomethylthiophthalimides include N-trichloromethylthiophthalimide and N-fluorodichloromethylthiophthalimide.

Examples of the dithiocarbamic acids includes bis(dimethylthiocarbamoyl) disulphide, ammonium N-methyldithiocarbamate and ammonium ethylene-bis(dithiocarbamate).

Examples of trihalomethylthiosulphamides include N-(dichlorofluoromethylthio)-N',N'-dimethyl-N-phenylsulphamide and N-(dichlorofluoromethylthio)-N',N'-dimethyl-N-(4-methylphenyl)sulphamide.

Examples of the N-arylmaleimides include N-(2,4,6-trichlorophenyl)maleimide, N-4 tolylmaleimide, N-3 chlorophenylmaleimide, N-(4-n-butylphenyl)maleimide, N-(anilinophenyl)maleimide, and N-(2,3-xylyl)maleimide.

Examples of the 3-(substituted amino)-1,3-thiazolidine-2,4-diones include 2-(thiocyanomethylthio)-benzothiazole, 3-benzylideneamino-1, 3-thiazolidine-2,4-dione, 3-(4-methylbenzylideneamino)-1,3-thiazolidine-2,4-dione, 3-(2-hydroxybenzylideneamino)-1,3-thiazolidine-2,4-dione,3-(4-dimethylaminobenzylideamino)-1,3-thiazolidine-2,4-dione, and 3-(2,4-dichlorobenzylideneamino)-1,3-thiazolidine-2,4-dione.

Examples of the dithiocyano compounds include dithiocyanomethane, dithiocyanoethane, and 2,5-dithiocyanothiophene.

Examples of the triazine compounds include 2-methylthio-4-butylamino-6-cyclopropylamino-s-triazine.

Examples of oxathiazines include 1,4,2-oxathiazines and their mono- and di-oxides such as disclosed in PCT patent WO 98/05719: mono- and di-oxides of 1,4,2-oxathiazines with a substituent in the 3 position representing (a) phenyl; phenyl substituted with 1 to 3 substituents independently selected from hydroxyl, halo, C1-12 alkyl, C5-6 cycloalkyl, trihalomethyl, phenyl, C1-C5 alkoxy, C1-5 alkylthio, tetrahydropyranyloxy, phenoxy, C1-4 alkyl carbonyl, phenyl carbonyl, C1-4 alkylsulfinyl, carboxy or its alkali metal salt, C1-4 alkoxycarbonyl, C1-4 alkylaminocarbonyl, phenylaminocarbonyl, tolylaminocarbonyl, morpholinocarbonyl, amino, nitro, cyano, dioxolanyl or C1-4 alkyloxyiminomethyl; naphthyl; pyridinyl; thienyl; furanyl; or thienyl or furanyl substituted with one to three substituents independently selected from C1-C4 alkyl, C1-4 alkoxy, C1-4 alkylthio, halo, cyano, formyl, acetyl, benzoyl, nitro, C1-C4 alkoxycarbonyl, phenyl, phenylaminocarbonyl and C1-4 alkyloxyiminomethyl; or (b) a substituent of generic formula 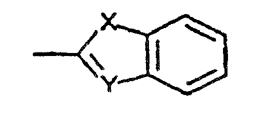 wherein X is oxygen or sulphur; Y is nitrogen, CH or C(C1-4 alkoxy); and the C6 ring may have one C1-4 alkyl substituent; a second substituent selected from C1-4 alkyl or benzyl being optionally present in position 5 or 6.

Other examples of the metal-free organic compounds include 2,4,5,6-tetrachloroisophthalonitrile, N,N-dimethyl-dichlorophenylurea, 4,5-dichloro-2-n-octyl-4-isothiazoline-3-one, N,N-dimethyl-N'-phenyl-(N-fluorodichloromethylthio)-sulfamide, tetramethylthiuramdisulphide, 3-iodo-2-propinylbutyl carbamate, 2-(methoxycarbonylamino)benzimidazole, 2,3,5,6-tetrachloro-4-(methylsulphonyl)pyridine, diiodomethyl-p-tolyl sulphone, phenyl(bispyridine)bismuth dichloride, 2-(4-thiazolyl)benzimidazole, dihydroabietyl amine, N-methylol formamide and pyridine triphenylborane.

According to a preferred embodiment, the use as antifoulant of the oxathiazines disclosed in WO-A-9505739 has the added advantage (disclosed in EP-A-823462) of increasing the self-polishing properties of the paint.

Among the fouling organisms, barnacles have proved to be the most troublesome, because they resist to most biocides. Accordingly, the paint formulation may also include at least an effective amount of at least one specific barnaclecide, such as cuprous oxide or thiocyanate. A preferred barnaclecide is disclosed in EP-A-831134. EP-A-831134 discloses the use of from 0.5 to 9.9 wt%, based on the total weight of the dry mass of the composition, of at least one 2-trihalogenomethyl-3-halogeno-4-cyano pyrrole derivative substituted in position 5 and optionally in position 1, the halogens in positions 2 and 3 being independently selected from the group consisting of fluorine, chlorine and bromine, the substituent in position 5 being selected from the group consisting of C1-8 alkyl, C1-8 monohalogenoalkyl, C5-6 cycloalkyl, C5-6 monohalogenocycloalkyl, benzyl, phenyl, mono- and di-halogenobenzyl, mono- and di-halogenophenyl, mono- and di-Cl-4-alkyl benzyl, mono- and di-C1-4- alkyl phenyl, monohalogeno mono-C1-4-alkyl benzyl and monohalogeno mono-C1-4- alkyl phenyl, any halogen on the substituent in position 5 being selected from the group consisting of chlorine and bromine, the optional substituent in position 1 being selected from C1-4 alkyl and C1-4 alkoxy C1-4 alkyl.

One or more antifoulants selected from such additional antifoulants may be employed in the present invention. The antifoulants are used in such an amount that the proportion thereof in the solid contents of the coating composition is usually from 0.05 to 90% by weight, preferably 0.05 to 80% by weight, and more preferably from 0.5 to 60% by weight. Too small antifoulant amounts do not produce an antifouling effect, while too large antifoulant amounts result in the formation of a coating film which is apt to develop defects such as cracking and peeling and thus becomes less effective in antifouling property.

The above plasticizer is not particularly limited, and includes, for example, phthalate-based plasticizers such as dioctyl phthalate, dimethyl phthalate, dicyclohexyl phthalate etc.; aliphatic dibasic ester-based plasticizers such as diisobutyl adipate, dibutyl sebacate etc.; glycol ester-based plasticizers such as diethylene glycol dibenzoate, pentaerythritol alkyl ester etc.; phosphate-based plasticizers such as tricresyl phosphate, trichloroethyl phosphate etc.; epoxy-based plasticizers such as epoxylated soybean oil, octyl epoxy stearate etc.; organic tin-based plasticizers such as dioctyltin laurate, dibutyltin laurate etc.; and trioctyl trimellitate, triacetylene.

The above pigment is not particularly limited, and includes, for example, extender pigments such as precipitated barium sulfate, talc, clay, chalk, silica white, alumina white, bentonite, etc.; and color pigments such as titanium oxide, zirconium oxide, basic lead sulfate, tin oxide, carbon black, graphite, red iron oxide, chromium yellow, phthalocyanine green, phthalocyanine blue, quinacridone.

Besides those described above, other additives are not particularly limited, and include, for example, rosin, organic monobasic acids such as monobutyl phthalate and monoctyl succinate etc., camphor, castor oil.

The antifouling coating of the present invention can be prepared for example by adding conventional additives such as other binder resins, an antifouling agent, a plasticizer, a coating-abrasion regulator, a pigment, a solvent etc. to the above resin composition comprising the boron-containing polymer according to the present invention and then mixing them by a mixer such as a ball mill, a pebble mill, a roll mill, a sand grind mill.

A dry coating film can be formed by applying the antifouling coating described above in a usual manner onto the surface of a substrate to be coated and then removing the solvent through evaporation at ordinary temperature or under heating.

The resin composition comprising the boron-containing polymer according to the present invention is a novel compound expressing an excellent antifouling property as a binder resin in an antifouling coating, and it is a hydrolysable resin having a so-called self-polishing property where the resin is gradually hydrolyzed in water to allow abrasion of the coating film.

The antifouling coating incorporating the resin composition comprising the boron-containing polymer according to the present invention is superior in the antifouling property of the resulting coating film.

The resin composition comprising a boron-containing polymer according to the present invention, when incorporated into an antifouling coating, is excellent in the antifouling property of the resulting coating film. The above boron-containing polymer can be synthesized simply and easily according to the production method of the present invention.

In particular, the compositions of the invention can be used as paints and coatings for coating industrial objects and, in particular, in the shipbuilding industry for ships hulls, including blocks for shipbuilding. In the latter case, blocks may be for hulls or other components such as ballast tanks.

The compositions can be applied, for example, by brushing, spraying, dipping and the like.

The invention will be more readily understood by reference to the following examples, which are included merely for purposes of illustration of certain aspects and embodiments of the present invention and are not intended to limit the invention.

### EXAMPLES

### Preliminary Remarks

Triphenylborane-pyridine complex was purchased from Hokko. Triphenylborane-octadecylamine was supplied by Invista. All other reagents are purchased from Aldrich and used without purification. The NMR spectra were recorded in CDCl₃ using BF₃:OEt₂ as external reference. GC analyses were performed on an Agilent HP6890 instrument using a DB-Wax 60 m 320 microns internal diameter and 0.5 microns of film thickness. The binders were precipitated in hexane at c.a. 1% and 1 microliter of the solution injected in a split-splitless injector. Detection is done by flame-ionisation detector.

The solids content was determined by weighing before and after heating a sample for 1 hour at 120°C [standard test methods ISO 3233/ASTM 2697/DIN 53219].The solids content is given by wt(%). The viscosity of binder solutions and of paints was determined with a Brookfield at 25°C [ASTM test method D2196-86]. Viscosity is given as (dPa.s)

### Resin A:

575 g xylene and 143.7 g of n-butanol were put in a 4L 4-necked flask and kept under nitrogen. The four necks of the flask were equipped with stirring means, a reflux cooler, a thermometer for temperature control of the reaction, and means for addition of the monomers.
A premix was prepared in a separate vessel; it contained:
- 277g of 2-ethylhexyl acrylate (2EHA) [30.8 wt% of monomers]
- 565g of methyl methacrylate (MMA) [62.6 wt% of monomers]
- 202 g of acrylic acid (AAc) [6.4 wt% of monomers]
- 18 g (= 2% on total monomer weight) of Trigonox 21S

The premix was added drop by drop to the reaction vessel (total time: about 3 hours) whilst maintaining the temperature at 115°C. 30 minutes after the end of the addition of the premix, one post-addition of 1.8 g (0.2 wt%) Trigonox 21S had been made. Thereafter the temperature was maintained at 115°C for 90 minutes to complete the reaction. The solution had been thinned down with 181.3 g of xylene. The binder had a solid content of 50 % and a viscosity of 7 dPa.s

### Resins B-L:

The same procedure as described for Resin A was used for the preparation of Resins B-L. The relative amounts are disclosed in Table 1.

Resin C is similar to A but produced without butanol. Resin D is similar to B but produced without butanol.

### Preparative Example 1

6 g of acetic acid (AcOH) and 32.1 g of, triphenylborane-pyridine complex (Borane 1) were dissolved in 195 g of xylene in a 250 ml 3-necked flask and kept under nitrogen. The tree necks of the flask were equipped with stirring means, a reflux cooler, a thermometer for temperature control of the reaction. The solution was heated to 80°C and stirred for 4h to lead to a clear solution. The volatile compounds were distilled (192.9g collected in the distillate.) in the reaction vessel at 60-70°C under reduced pressure to lead to a brown solution.
¹¹B NMR showed a main peak at 6.8 ppm and a small at 4.6 ppm.

### Preparative Examples 2-4

The same procedure as described for Preparative Example 1 was used for the preparation of Preparative Examples 2-4. The relative amounts are disclosed in Table 2.

In preparative example 2, ¹¹B NMR showed peaks at 4.6 and 6.8 ppm.

In preparative example 3 (n-butanol (n-BuOH) added later), ¹¹B NMR showed peaks at 28.7 and 45.5 ppm

In preparative example 4, in the presence of n-butanol, the reaction leads to a precipitate.

### Comparative Example 1

157.1 g of Resin A, 185.5 g of xylene and 22.5 g of triphenylborane-pyridine complex were put in a 4 L 4-necked flask and kept under nitrogen. The four necks of the flask were equipped with stirring means, a reflux cooler and a thermometer for temperature control of the reaction. The solution was heated to 80°C and stirred for 4h to lead to a cloudy solution. The volatile compounds were distilled (228.5 g collected in the distillate.) from the reaction vessel at 60-70°C under reduced pressure to lead to a brown cloudy resin solution.

Analysis of the distillate by GC revealed the presence of 47 % of the stoichiometric amount of benzene and 32% of the stoichiometric amount of pyridine.
¹¹B NMR of the dry resin dissolved in CDCl₃ showed peaks at 28.7 and 45.5 ppm.

### Comparative Example 2

The same procedure as described for Comparative Example 1 was used for the preparation of Comparative Example 2. The relative amounts are disclosed in Table 1.

### Example 1

157.1 g of Resin C, 185.5 g of xylene and 22.5 g of triphenylborane-pyridine complex were put in a 4 L 4-necked flask and kept under nitrogen. The four necks of the flask were equipped with stirring means, a reflux cooler and a thermometer for temperature control of the reaction. The solution was heated to 80°C and stirred for 4h to lead to a clear solution. The volatile compounds were distilled (248.5 g collected in the distillate.) of the reaction vessel at 60-70°C under reduced pressure to lead to a brown clear resin solution.

Analysis of the distillate by GC revealed the presence of 100 % of the stoichiometric amount of benzene and 1% of the stoichiometric amount of pyridine.
¹¹B NMR of the dry resin dissolved in CDCl₃ showed peaks at 4.6 ppm.

### Examples 2-11

The same procedure as described for Example 1 was used for the preparation of Examples 2-11. The relative amounts are disclosed in Table 3.

### Example 12

The product prepared according to Example 1 has a viscosity of 26 dPa.s (23°C) at 50% solids. This material has a viscosity of 52 dPa.s (23°C) at 50% solids after 11 months storage at room temperature.

To a sample, prepared according to Example 1, 5% wt/wt % of the solvent was replaced by pyridine. The viscosity of that sample was 22 dPa.s (23°C) at 50% solids; after 11 months of storage at room temperature, the viscosity was 25 dPa.s (23°C) at 50% solids.

### Example 13: (Addition of the stabilizing agent (amine) before distillation)

157.1 g of Resin C, 185.5 g of xylene and 22.5 g of triphenylborane-pyridine complex were put in a 4 L 4-necked flask and kept under nitrogen. The four necks of the flask were equipped with stirring means, a reflux cooler and a thermometer for temperature control of the reaction. The solution was heated to 80°C and stirred for 4h to lead to a clear solution. 103.6 g of octadecylamine and 103 g of xylene were added to the solution and the volatile compounds were distilled (511 g collected in the distillate.) out of the reaction vessel at 60-70°C under reduced pressure (150 mbar) to lead to a brown clear resins solution that has a viscosity of 12.3 dPa.s (23°C) and 46.5% solids.

After 11 months of storage at room temperature, the binder has a viscosity of 12.7 dPa.s (23°C) and 46.5% solids.

Tables 4 and 5 show the composition of various antifouling paints which illustrate the present invention. The binder, solvent and additives together with the biocidal actives are blended together in the proportions shown for examples P1-P14.

Subsequently, the each of the paint formulations P1-P14 were coated onto raft panels and left under static immersion conditions in sea water for 1 year together with an unpainted panel. The panels were then compared for hard and soft fouling and the results are as shown. The results show that at even very low levels the barnacle antifoulants in combination with the binder produce excellent anti-fouling results.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

| **TABLE 1** | | | | | | | | | | | | |
|---|---|---|---|---|---|---|---|---|---|---|---|---|
| **Resin Code** | **A** | **B** | **C** | **D** | **E** | **F** | **G** | **H** | **I** | **J** | **K** | **L** |
| **Solvent (Parts Solvent)** | | | | | | | | | | | | |
| Xylene | 64 | 64 | 80 | 80 | 80 | 80 | 80 | 80 | 80 | 80 | 80 | 80 |
| Butanol | 16 | 16 | 0 | 0 | 0 | | 0 | 0 | 0 | 0 | 0 | 0 |
| | | | | | | | | | | | | |

| **Monomer (Parts Monomer)** | | | | | | | | | | | | |
|---|---|---|---|---|---|---|---|---|---|---|---|---|
| Methyl Methacrylate | 62.6 | | 62.6 | | 56 | 57 | 65.8 | 59 | 61.6 | 60 | 57 | 62.5 |
| 2-ethylhexyl acrylate | 30.8 | | 30.8 | | 28 | 31 | 30.8 | 28 | 30.8 | 31 | 31 | 27.5 |
| Ethyl acrylate | | 9.5 | | 9.5 | | | | | | | | |
| 2-ethylhexyl methacrylate | | 28.7 | | 28.7 | | | | | | | | |
| Cyclohexyl methacrylate | | 15 | | 15 | | | | | | | | |
| Methoxy propylene glycol methacrylate | | 30 | | 30 | | | | | | | | |
| (n=9) | | | | | | | | | | | | |
| Methyl acrylate | | | | | 10 | | | 10 | | | | |
| vinyl pyrrolidone | | | | | | 6 | | | | | | |
| Acrylic acid | 6.4 | 16.7 | 6.4 | 16.7 | 6 | 6 | 3.4 | 3 | | 9 | 12 | 10 |
| Methacrylic acid | | | | | | | | | 7.6 | | | |
| | | | | | | | | | | | | |
| t-Butylperoxy 2-ethylhexanoate | 2 | 2 | 2 | 2 | 2 | 2 | 2 | 2 | 2 | 2 | 2 | 2 |
| (relative to monomer parts) | | | | | | | | | | | | |

| **Additional Solvent (Parts solvent)** | | | | | | | | | | | | |
|---|---|---|---|---|---|---|---|---|---|---|---|---|
| Xylene | 16 | 16 | 20 | 20 | 20 | 20 | 20 | 20 | 30 | 20 | 20 | 20 |
| Butanol | 4 | 4 | 0 | 0 | 0 | 0 | 0 | 0 | 0 | 0 | 0 | 0 |
| | | | | | | | | | | | | |
| t-Butylperoxy 2-ethylhexanoate | 0.2 | 0.2 | 0.2 | 0.2 | 0.2 | 0.2 | 0.2 | 0.2 | 0.2 | 0.2 | 0.2 | 0.2 |
| (relative to monomer parts) | | | | | | | | | | | | |
| | | | | | | | | | | | | |
| Solid contents | 50 | 50 | 50 | 50 | 50 | 50 | 50 | 50 | 45 | 48.2 | 50 | 45 |
| Viscosity (dPaS) | 7 | 6 | 59 | 98 | 22 | 91 | 12 | 11 | 140 | 135 | 410 | 91 |
| Acid value based on dry binder(mg | 50 | 130 | 50 | 130 | 47 | 47 | 27 | 24 | 50 | 72 | 93 | |
| KOH/g) | | | | | | | | | | | | |

| Table 2 | | | | |
|---|---|---|---|---|
| **Preparative Examples** | **1** | **2** | **3** | **4** |
| Step 1 | | | | |
| AcOH | 6 | 12 | 6 | 6 |
| Borane 1 | 32.1 | 32.1 | 32.1 | 32.1 |
| n-BuOH | 0 | 0 | 0 | 7.4 |
| | | | | |
| Xylene | 195 | 195 | 195 | 195 |
| | | | | |
| Amount Distillate | 193 | 193 | 125 | 125 |
| | | | | |

| Step 2 | | | | |
|---|---|---|---|---|
| n-BuOH | 0 | 0 | 7.4 | 0 |
| | | | | |
| | | | | |
| Product | clear | clear | clear | precipitate |
| ¹¹B NMR (ppm) | 6.8 | 4.6, 6.8 | 287, 45.5 | |
| | | | | |

| **Table 3** | | | | | | | | | | | | | |
|---|---|---|---|---|---|---|---|---|---|---|---|---|---|
| **Examples** | **CE1*** | **CE2**** | **1** | **2** | **3** | **4** | **5** | **6** | **7** | **8** | **9** | **10** | **11** |
| relative amounts (g) | | | | | | | | | | | | | |
| Resin A | 157.1 | | | | | | | | | | | | |
| Resin B | | 102.7 | | | | | | | | | | | |
| Resin C | | | 224.4 | | 476.7 | | | | | | | | |
| Resin D | | | | 77.1 | | | | | | | | | |
| Resin E | | | | | | 484.3 | | | | | | | |
| Resin F | | | | | | | 484.9 | | | | | | |
| Resin G | | | | | | | | 627.7 | | | | | |
| Resin H | | | | | | | | | 639.5 | | | | |
| Resin I | | | | | | | | | | 513.1 | | | |
| Resin J | | | | | | | | | | | 282.8 | | |
| Resin K | | | | | | | | | | | | 230.1 | |
| Resin L | | | | | | | | | | | | | 359.3 |
| | | | | | | | | | | | | | |
| TPB-Py | 22.5 | 32.1 | 32.1 | 25.7 | | | | | | | | | |
| TPB-ODA | | | | | 101.3 | 97 | 96.5 | 71.5 | 64.6 | 110 | 98 | 99 | 103.2 |
| Rosin | | | | | | | | | | | 20.5 | 31 | |
| | | | | | | | | | | | | | |
| Xylene | 185.5 | 282 | 265 | 232 | 381.3 | 364.7 | 363 | 269 | 243.3 | 362.3 | 368 | 374 | 310 |
| | | | | | | | | | | | | | |
| Amount Distillate | 228.5 | 210.2 | 228.4 | 206 | 342 | 417 | 368 | 270 | 247 | 336 | 432 | 275 | 272 |
| | | | | | | | | | | | | | |
| Product | cloudy | cloudy | clear | clear | clear | clear | clear | clear | clear | clear | clear | clear | clear |
| Solids | | | | 50 | 50 | 50 | 50 | 50 | 50 | 50 | 50 | 50 | 50 |
| Visco | | | | >150 | 17.5 | 38 | 20 | 10 | 7 | 30 | 17 | 9 | 48 |

| Analysis of distillate | | | | | | | | | | | | | |
|---|---|---|---|---|---|---|---|---|---|---|---|---|---|
| Benzene | 47% | | 100% | | | | | | | | | | |
| Pyridine | 32% | | 1% | | | | | | | | | | |
| ¹¹B NMR (ppm) | 25.7, 45.5 | | 4.6 | | | | | | | | | | |

| | | | | | | | | | | | | | |
|---|---|---|---|---|---|---|---|---|---|---|---|---|---|
| *: Prepared according to Example 1 of ** Prepared according to Example 3 EP1245592 of EP1245592 | | | | | | | | | | | | | |

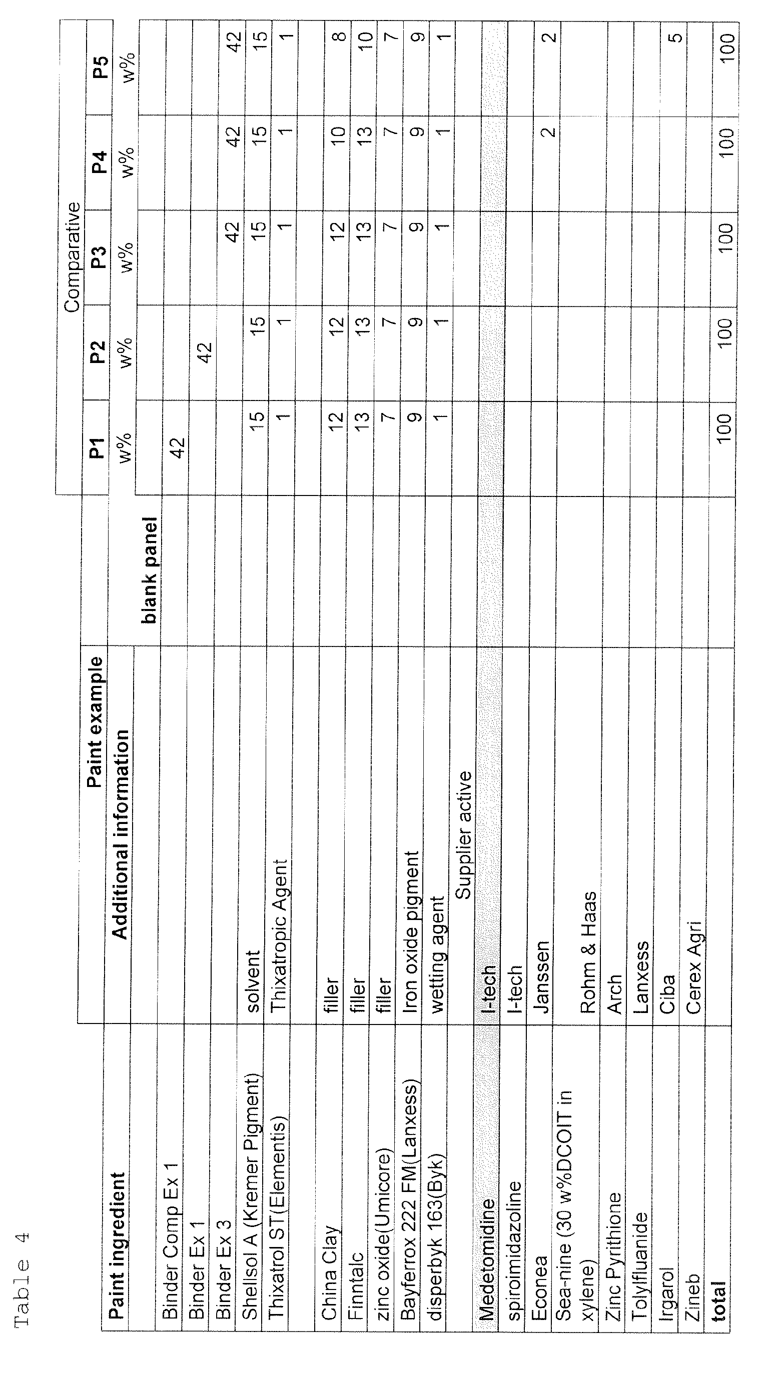

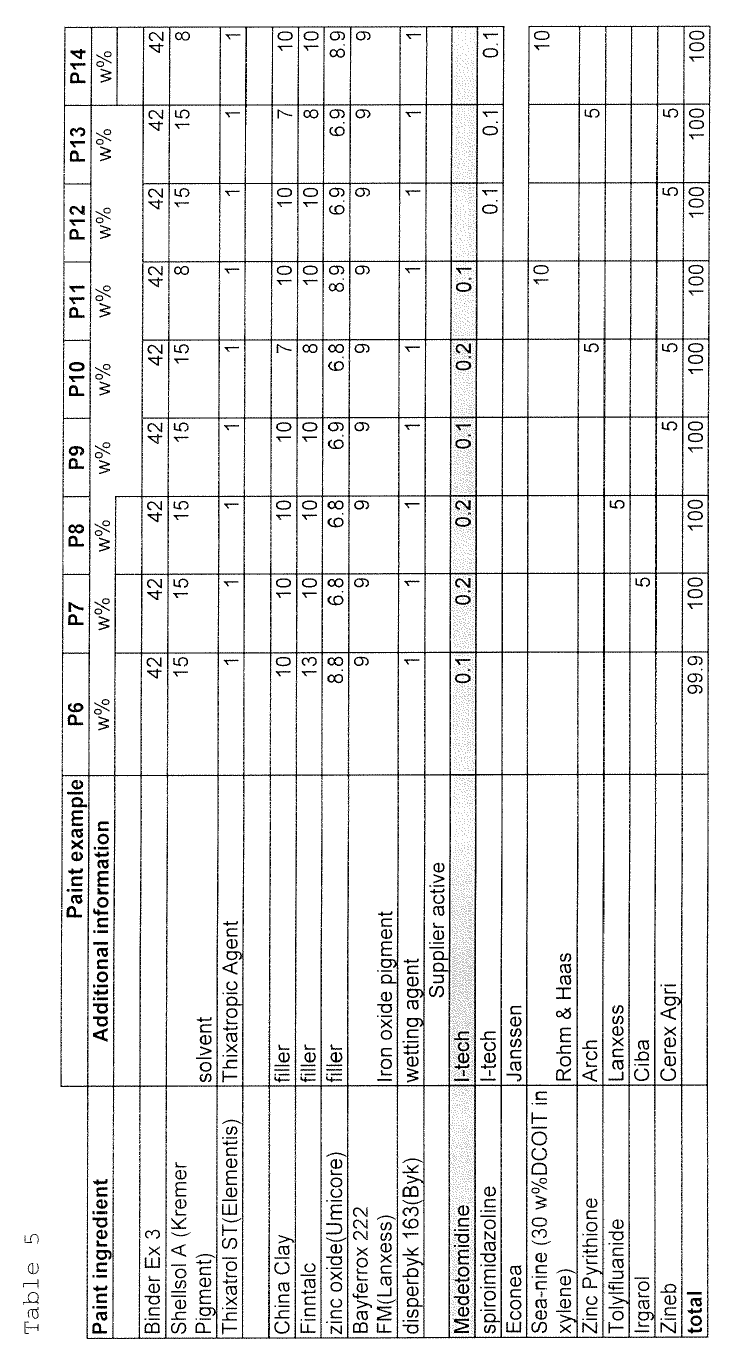

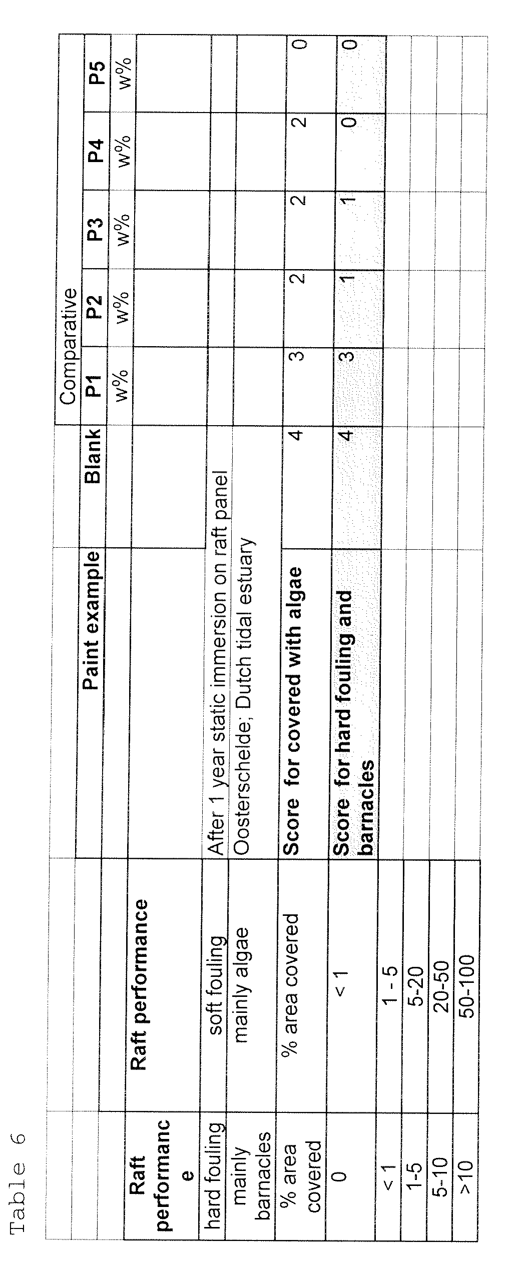

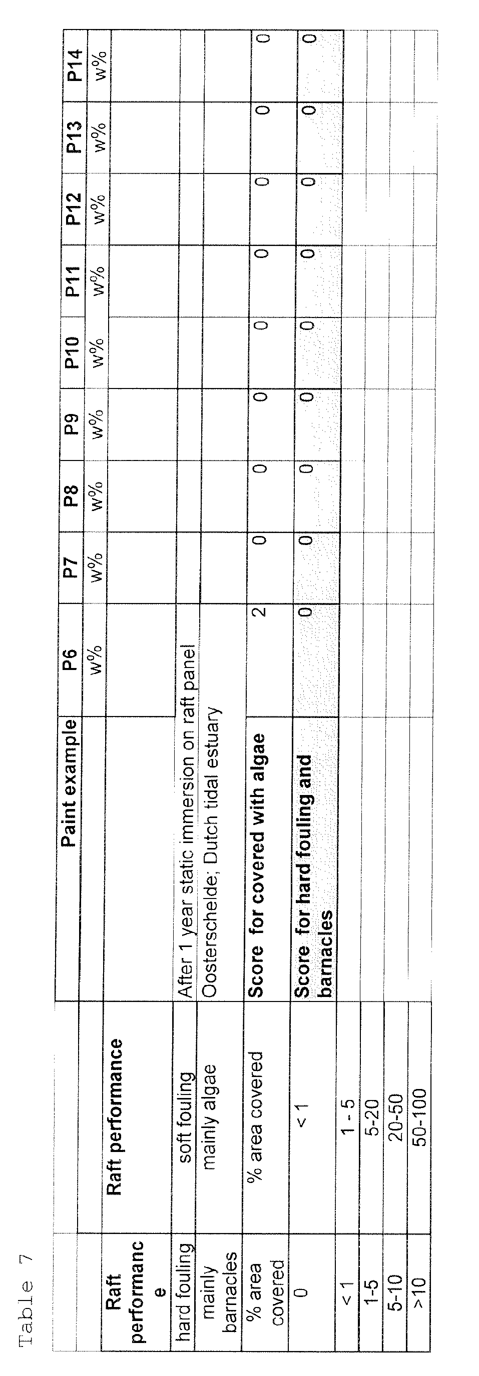

## Claims

1. An antifouling coating comprising a resin composition, a solvent and a barnacle antifoulant, the resin composition comprising
a polymer having in a pendant side chain or at a terminal end thereof, at least one group represented by formula (I) :- 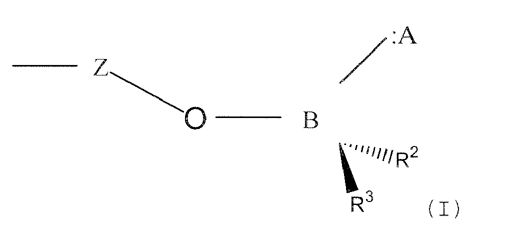 wherein Z represents 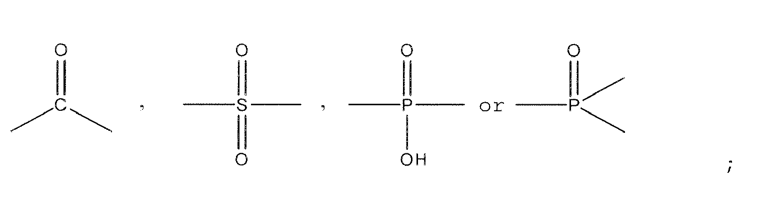 wherein R² and R³ are independently selected from an alkyl, alkenyl, alkynyl, aryl, aralkyl or alkaryl radical optionally substituted, by one or more substituents independently selected from the group comprising alkyl, alkoxyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond;
optionally, the solvent being free of n-butanol and **characterised in that** the barnacle antifoulant is selected from at least one compound which interferes with nerve signalling in barnacles, particularly in cyprid barnacles.

2. An antifouling coating comprising:-
(a) a resin composition having
a polymer including in a pendant side chain or at a terminal end thereof, at least one group represented by formula (I):- 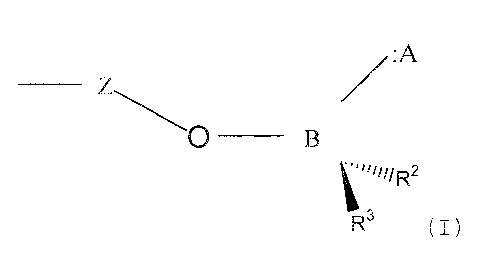 wherein Z represents 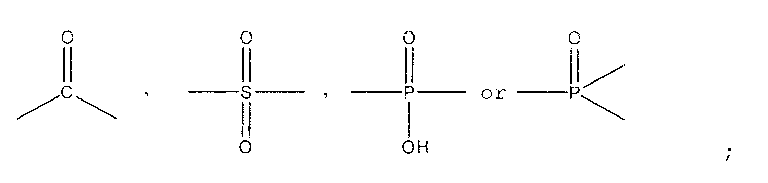 wherein R² and R³ are independently selected from an alkyl, alkenyl, alkynyl, aryl, aralkyl or alkenyl radical optionally substituted, by one or more substituents independently selected from the group comprising alkyl alkoxyl, aralkyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond;
optionally, the resin composition including a solvent and being free of n-butanol;
**characterised in that** the coating includes a barnacle antifoulant selected from at least one compound which interferes with nerve signalling in barnacles, particularly in cyprid barnacles.

3. An antifouling coating comprising:-
(a) a resin composition having
a polymer including in a pendant side chain or at a terminal end thereof, at least one group represented by formula (I):- 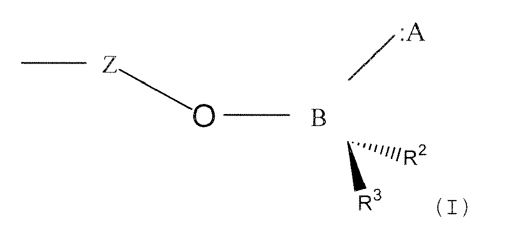 wherein Z represents 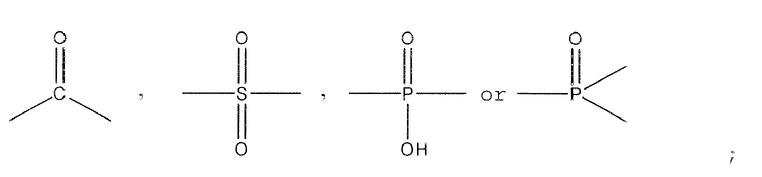 wherein R² and R³ are independently selected from an alkyl, alkenyl, alkynyl, aryl, aralkyl or alkaryl radical optionally substituted by one or more substituents independently selected from the group comprising alkyl, alkoxyl, aralkyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond;
the composition including a stabiliser to stabilise the group of formula I;
**characterised in that** the coating includes a barnacle antifoulant which optionally may also be the stabiliser and which is selected from at least one compound which interferes with nerve signalling in barnacles, particularly in cyprid barnacles.

4. An antifouling coating according to claim 3, wherein the stabiliser is an amine or nitrogen containing heterocyclic compound.

5. An antifouling coating according to claim 4, wherein the stabiliser is an uncomplexed heterocyclic compound having a substituted or unsubstituted nitrogen atom or wherein the stabiliser is any primary, secondary or tertiary amine having one or more alkyl, cycloalkyl, alkenyl, alkynyl, aralkyl, alkaryl, aryl group(s) or combinations thereof as defined herein, which groups may be unsubstituted or substituted with alkoxy, halogen, hydroxyl, -COOH, -COOalkyl or further amino radicals.

6. An antifouling coating according to claim 4 or 5, wherein the stabiliser is added to the composition at a level of 1-50% wt/wt total resin composition.

7. A method of producing an antifouling coating having a boron-containing polymer and a barnacle antifoulant which comprises a step of reacting a polymer having at least one acid group of formula -Z(OH)ₙ where n=1 or 2 and Z is as defined in claim 1 above in a side chain or at a terminal end thereof, with a nitrogen atom-coordinated boron compound represented by the following formula (II): 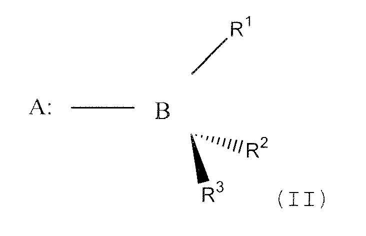 wherein R¹, R² and R³ may be the same or different and are independently selected from an alkyl, alkenyl, alkynyl, aryl, aralkyl or alkaryl radical optionally substituted by one or more substituents independently selected from the group comprising alkyl or aryl, alkoxyl, aralkyl, alkaryl, aralkyloxyl, alkaryloxyl, aryl, aryloxyl, halogen, amino or amino alkyl radicals; and A represents a primary to tertiary amine or a nitrogen containing heterocyclic compound which in either case is coordinated with the boron through an N-B bond;
wherein the polymer reaction takes place in the absence of n-butanol; and
adding at least one barnacle antifoulant selected from at least one compound which interferes with nerve signalling in barnacles, particularly in cyprid barnacles, to the boron-containing polymer.

8. A method of producing an antifouling coating having a boron-containing polymer and a barnacle antifoulant which comprises (a) reacting a polymerizable organic acid with a nitrogen atom-coordinated boron compound represented by the formula (II) as defined in claim 7, wherein the reaction takes place in the absence of n-butanol and (b) polymerizing or copolymerising a monomer component comprising the boron-containing polymerizable monomer obtained in step (a), optionally, in the absence of n-butanol; and
adding at least one barnacle antifoulant selected from at least one compound which interferes with nerve signalling in barnacles, particularly in cyprid barnacles, to the resulting boron-containing polymer.

9. A method according to claim 8, wherein the said polymerizable organic acid is a polymerizable organic carboxylic acid, a polymerizable organic sulfonic acid or a polymerizable organic phosphoric acid.

10. An antifouling coating comprising:-
(a) a binder composition, the binder composition having a boron containing polymer of formula (ZO)ₙBR₃₋ₙ: A wherein n=1-3 and R may be R² and/or R³ as defined below derived from a polymer having an acid level of greater than 60mg KOH/g polymer, and a boron complex of formula II 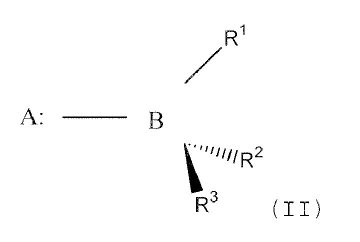 wherein R¹, R² and R³ are independently selected from an alkyl, alkenyl, alkynyl, aryl, aralkyl or alkaryl radical optionally substituted by one or more substituents independently selected from the group comprising alkyl, alkoxyl, aralkyl, alkaryl, aralkyloxyl, alkaryloxyl, aryl, aryloxyl, halogen, amino or amino alkyl radicals; and
A: represents a primary to tertiary amine or a nitrogen containing heterocyclic compound which in either case is coordinated with the boron through an N-B bond;
wherein the binder composition includes an additional acid, the said additional acid having been added at a ratio of less than 1 mole equivalent additional acid : 1 mole equivalent of the added boron complex in the binder composition; and
(b) at least one barnacle antifoulant selected from at least one compound which interferes with nerve signalling in barnacles, particularly in cyprid barnacles.

11. An antifouling coating according to claim 10, wherein the weight ratio of acidic polymer:additional acid is in the range 10:1 to 1:10.

12. An antifouling coating according to claim 10 or 11, wherein the additional acid is a non-polymerisable acid.

13. An antifouling coating according to any of claims 1 to 6 or 10-12, wherein the primary to tertiary amine may be selected from alkyl group-containing amines; acyl group-containing amines; alkoxyl group-containing amines; aryl group-containing amines; allyl amine, vinyl amine and aminostyrene.

14. An antifouling coating according to claim 13, wherein a primary amine is selected.

15. An antifouling coating according to any of claims 1 to 6 or 10-14 wherein the nitrogen containing heterocyclic compound is selected from pyridine, pyrrole, pyrazole, isoxazole, pyrazine, pyrimidine, imidazole, quinoline, indole, carbazole, phenanthroline; and heterocyclic compounds having a substituent group, such as 2-ethyl pyridine, picolinic acid, nicotinic acid, octyl nicotinate, vinyl pyridine and allyl pyridine.

16. An antifouling coating according to any of claims 1 to 15, wherein the solvent is selected from acetates, ketones and non functional group containing aromatic compounds such as ethyl acetate, butyl acetate, methylethyl ketone, methyl isobutyl ketone, ethylene glycol monoethylether acetate, methoxypropyl acetate, toluene, xylene, white spirit, ethoxypropyl acetate, ethoxyethyl propionate, methoxybutyl acetate, butyl glycol acetate, solvent naphtha, and mixtures of these solvents.

17. An antifouling coating comprising a resin composition and a barnacle antifoulant, the resin composition comprising a polymer having in a pendant side chain or at a terminal end thereof, at least one group represented by formula (I):- 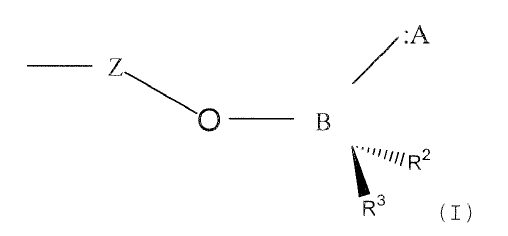 wherein Z represents 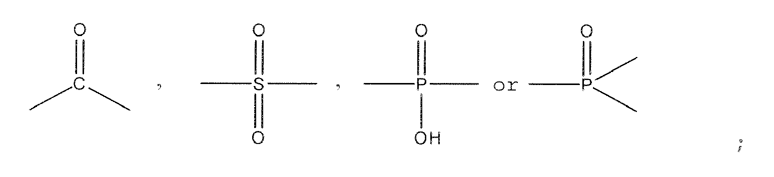 wherein R² and R³ are independently selected from an alkyl, alkenyl, alkynyl, aryl, aralkyl or alkaryl radical optionally substituted, by one or more substituents independently selected from the group comprising alkyl, alkoxyl, aralkyl, alkaryl, aralkyloxyl, alkaryloxyl, aryl, aryloxyl, halogen, amino or amino alkyl radicals;
and wherein A: represents a primary to tertiary amine or a nitrogen containing heterocyclic compound which in either case is coordinated with the boron through an N-B bond;
the resin composition being optionally free of alkoxy boryl residues;
**characterised in that** the at least one barnacle antifoulant is selected from at least one compound which interferes with nerve signalling in barnacles, particularly in cyprid barnacles.

18. An antifouling coating according to any of claims 1-6 or 10-17 wherein the barnacle antifoulants have an amine group or contain a nitrogen containing heterocyclic group.

19. An antifouling coating according to any of claims 1-6 or 10-17 wherein the barnacle antifoulants are selected from a suitable Catemine.

20. An antifouling coating according to claim 19 wherein the barnacle antifoulants are selected from Catemine I (medetomidine), Catemine 3 (spiroimidazoline) and/or Clonidine.

21. A resin composition according to any of claims 1-6 or 10-17, wherein the composition is a solution.
